# EUROPEAN PATENT APPLICATION

(11) **EP 2 509 295 A2**
(43) Date of publication of application: **10.10.2012**
(21) Application number: 11175517.9
(22) Date of filing: 27.07.2011
(51) Int. Cl.: H04M 3/493

(54) **Connecting to a telephone extension using a telephone directory and an audio token**

(30) Priority: 04.04.2011 US 66082
(71) Applicant: Mitel Networks Corporation, Ottawa, ON K2K 2W7 (CA)
(72) Inventor: Trinh, Trung (Tim), Nepean, Ontario K2G 0Z5 (CA)
(74) Representative: Venner Shipley LLP

(57) **Abstract**

Connecting to a telephone extention using a telephone directory and an audio token.

A system and method for connecting to a telephone extension listed in a telephone number database is disclosed. The method comprises recording an audio token on a mobile communication device. The audio token is associated with a telephone number included in the database. The audio token is transmitted from the mobile communication device to a server over a digital channel. The telephone number in the database that is associated with the audio token is selected using speech recognition. The mobile communication device is then connected with the telephone number.

## Description

This invention relates to connecting to a telephone extension

Many models of mobile phones include features such as speech recognition that allow a user to call personal contacts listed in the phone's electronic phonebook. This feature enables people to more quickly call a personal contact without the need to scroll through a phone list. More importantly, the feature can be used in situations where it could be dangerous to manually look up a contact using the phone's graphical user interface, such as when a person is driving a car or walking.

Unfortunately, the use of speech recognition to look up a contact or make a phone call is limited to the phone numbers listed in the phone's electronic phone book. If a person desires to call someone at work, such as a coworker, an administrative assistant, or someone in human resources, the phone number must first be programmed in to the person's phone. Entering a large number of contacts in a phones electronic phonebook can be cumbersome due to limitations inherent in most types of mobile phone data entry designs. Maintaining the accuracy of contact information can be time consuming as contact information in a large business can change on a daily basis. Thus, the use of speech recognition to make phone calls on a mobile phone is typically limited to phone numbers that are frequently called.

Features and advantages of the invention will be apparent from the detailed description which follows, taken in conjunction with the accompanying drawings, which together illustrate, by way of example, features of the invention; and, wherein:
Figure 1 illustrates an example diagram of a mobile speech attendant system in accordance with an embodiment of the present invention; and
Figure 2 depicts a flow chart of a method for connecting to a telephone extension listed on a business directory in accordance with an embodiment of the present invention.

Reference will now be made to the exemplary embodiments illustrated, and specific language will be used herein to describe the same. It will nevertheless be understood that no limitation of the scope of the invention is thereby intended.

As used herein, the term "substantially" refers to the complete or nearly complete extent or degree of an action, characteristic, property, state, structure, item, or result. For example, an object that is "substantially" enclosed would mean that the object is either completely enclosed or nearly completely enclosed. The exact allowable degree of deviation from absolute completeness may in some cases depend on the specific context. However, generally speaking the nearness of completion will be so as to have the same overall result as if absolute and total completion were obtained. The use of "substantially" is equally applicable when used in a negative connotation to refer to the complete or near complete lack of an action, characteristic, property, state, structure, item, or result.

As used herein, a server is a physical computer dedicated to running one or more service programs used to serve the needs of programs running on other computing devices that are in communication with the server. The service program(s) can serve the needs or requests of other programs which may or may not be running on the same computer. A server can be a system comprised of software and hardware that is dedicated to a specific purpose such as a database server, a file server, a mail server, a print server, a telephony server, a credentials server, and so forth. Alternatively, a single server can be used to provide multiple services.

An initial overview of technology embodiments is provided below and then specific technology embodiments are described in further detail later. This initial summary is intended to aid readers in understanding the technology more quickly but is not intended to identify key features or essential features of the technology nor is it intended to limit the scope of the claimed subject matter.

The use of speech recognition to place a phone call on a mobile phone or other type of communication device is typically limited to phone numbers that are programmed in to the device. Speech recognition can be of great benefit when making phone calls while performing other activities such as driving, walking or other types of multitasking. To allow the speech recognition capability to be used to place phone calls to a broader number of people, a directory identification application can operate on a mobile communication device. The application can be used to digitally record an audio token, such as a person's name. Rather than using the speech recognition feature on the mobile communication device, the directory identification application can communicate the audio token over a wireless data channel to a server running speech recognition software, such as an enterprise speech attendant program.

The speech attendant program can communicate with a database containing telephone numbers. For instance, the database may be a business or corporate telephone number database for dozens or hundreds of employees. The enterprise speech attendant program can associate the audio token with a specific telephone number in the database. This telephone number can be communicated to the mobile phone and the call can be connected.

There are several advantages to using a speech recognition program operating on a server. Such a program is typically not limited in size and power requirements, as a program operating on a mobile phone typically is. This allows the speech recognition program operating on the server to more accurately determine a phone number based on the audio token. In addition, the server program can include better filtering to filter audio interference such as wind, road noise, or other types of background noise that typically occur when using a mobile communication device.

In addition, the server program can be used to more accurately distinguish different speech patterns, such as accents and dialects. Similarly, the server program can better differentiate between close names. In a database that includes hundreds of names there may be multiple instances where the names sound similar. A server can often perform thousands of times more calculations per second than a mobile communication device. The greater power resources, digital storage resources, and computing capability available at a server allows the server to better distinguish between names with similar pronunciations. In addition, the increased resources allows for the support of nickname expansions. For example, Bill can be called and recognized as William, Willy, or Billy.

In contrast, even if a database that includes hundreds of contacts were loaded on a mobile phone, the smaller and lower powered speech recognition program operating on the mobile phone may have difficulty distinguishing between close sounding names, resulting in a greater number of errors. If errors were to occur too often it would substantially decrease the benefits of using the speech recognition program to dial telephone numbers.

The server used to operate the speech recognition program can be in communication with a telephony server. The telephony server may be a Private Branch eXchange (PBX) server, an Internet Protocol server (IP) used to communicate Voice Over Internet Protocol (VOIP), or another type of server used for digital telephony. The telephony server can be configured to operate a program such as Mitel Communication Director (MCD).

The telephony server may operate on a different server than the server hosting the speech recognition program. Alternatively, the speech recognition program may operate on the telephony server. In yet another embodiment, multiple programs may operate as separate instances on a virtual server. For example, a telephony server, a speech attendant server, and a database server may all operate as separate instances on a single computing device.

In one embodiment, the telephone number associated with the audio token can be output by the speech recognition program running on the server. The telephone number can be communicated to the telephony server. The telephony server can then be used to place a first call to the mobile communication device and a second call to the telephone number associated with the audio token. The two telephone calls can then be connected by the telephony server.

The ability to use the telephony server to place the phone calls to the mobile communication device and the phone number associated with the audio token and then connect the two phone calls provides a number of advantages. In certain regions of the world, such as Europe, mobile phone bills are calculated based on outgoing calls. When the telephony server is used to connect the phone calls then the call effectively becomes an incoming call to the mobile communication device. This allows a person to place a phone call to someone in a company directory with a reduced or negligible cost to the person's mobile phone. Businesses can save substantial amounts of money on mobile phones by reducing the number of outgoing calls made to business associates.

In addition, a call made through a telephony server can provide many more advantages than are available through a mobile phone carrier. For instance, many of the services offered by a telephony server can be made available to the caller, such as call waiting, call forwarding, conference calling, and so forth. Additional cost advantages may be gained when conducting long distance calls. The operator of the telephony server may be able to make long distance calls at a more economical rate than is available through the mobile phone carrier. The telephony server can be configured to provide different caller ID information for the phone call than would occur if the phone call were placed through the mobile phone user carrier. For instance, the user of the mobile phone may have his or her work information, such as the company name and number or the employee's name and work number displayed in the caller ID. This enables the person receiving the call to more easily identify the person calling relative to the mobile phone information, which may not display a name or number that a coworker can identify with. In another embodiment, an agent operating on the telephony server, or another server, can be used to perform selected tasks when the line for the telephone number associated with the audio token is busy. For instance, the agent can query the caller and ask them to leave a message similar to the audio token recording. This message can then be sent directly to the telephone number's messaging system bypassing the call connection, voice mail greeting, and voice mail capture steps.

In another embodiment, the telephony server can pass a message (either text or audio) back to the mobile device indicating that the intended called party is currently busy and will not be available for a selected time period, such as one hour. The telephony server, or another server in communication with the telephony server, can gather this kind of intelligent information from various sources such as a presence server, an Exchange Server, etc within an enterprise network. The telephony server can offer many additional benefits and services, as can be appreciated.

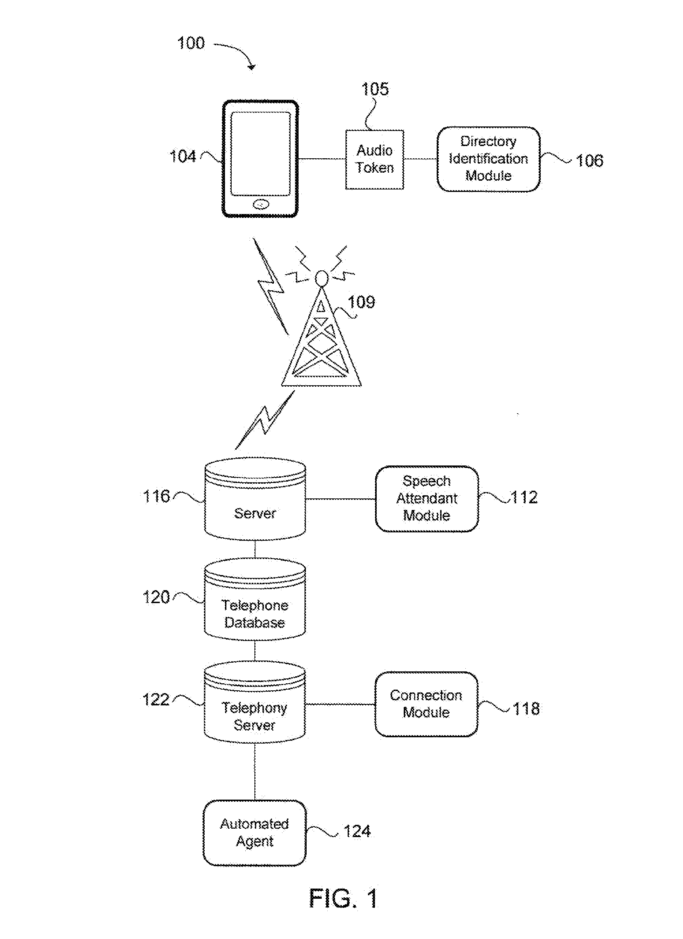

One example illustration of a mobile speech attendant system 100 is displayed in Figure 1. The system is comprised of a directory identification module 106 that is operable on a mobile communication device 104. The mobile communication device can be a wireless telephone configured to communicate using a telephony standard. For instance, the telephony standard may be the Institute of Electrical and Electronics Engineers (IEEE) 802.16 standard, the 3^{rd} Generation Partnership Project (3GPP) Long Term Evolution (LTE), or similar standards for cellular type wireless communication.

The digital communication device 104 can also include computing devices that are able to communicate using communication standards that use short range wireless communication, such as IEEE 802.11 "WiFi" links that enable communication using standards such as Voice Over Internet Protocol (VOIP). For instance, a tablet computer having a microphone may use a WiFi link to communicate to a wired connection that enables VOIP telephony to be conducted. The mobile communication device can be any type of computing device capable of wireless telephony.

The directory identification module 106 can operate on the mobile communication device 104 and record an audio token 105 that is associated with a telephone number in a remote telephone directory. A remote telephone directory is an electronic telephone directory that is not located on the mobile communication device. For instance, the remote telephone directory may be a telephone database located on a server 120. The telephone database can be used to associate people, places, or things with selected telephone numbers and/or extensions.

The audio token 105 can be communicated to a server 116 over a data channel. In one embodiment, the directory identification module 106 can be an application that can be activated by a user to record the audio token. Alternatively, the directory identification module can work in conjunction with the mobile computing device's 104 integrated voice activation programs.

For instance, the mobile communication device 104 can include an integrated voice activation program that allows a user to say a key word or trigger a key that activates the program. The user may say "call" to activate the program. Alternatively, a button on the device 104 may be depressed, followed by stating a desired audio token 105, such as a person's name or another term associated with a particular telephone number. When the user wants to make a voice activated call to a telephone number that is included in a telephone number database located on a separate computing device, such as on a telephone database server 120, the user can speak a predetermined audio phrase (audio token) that instructs the user's mobile communication device to call a number associated with the telephone database, such as the user's work number. The directory identification module 106 can then be configured to intercept the mobile communication device's standard calling procedure and instead send a digital copy of the audio token to a speech attendant module 112 that is operable on a server 116. As previously discussed, the speech attendant module is configured to determine the telephone number associated with the audio token.

It should be noted that, while the speech attendant module 112 provides a speech recognition program that is likely more capable than the integrated speech recognition program operating on the mobile communication device 104, no speech recognition program is completely accurate. If the speech attendant module is not capable of determining a telephone number based on the audio token 105, or isn't able to narrow it down to a single telephone number in the database, or if verification of the telephone number to which the mobile device is to be connected is otherwise desired, the speech attendant module can communicate with the telephony server 122 to call the mobile computing device. An automated system such as an automated agent 124 can then be connected to the mobile communication device through the telephony server. The automated agent can ask the user to either repeat the desired audio token or to select from a list of potential names that may match the audio token. While the automated agent may verbally ask the user to repeat or otherwise verify the information in the audio token, in some embodiments of the invention, the message or verification/clarification inquiry from the automated agent may be visual, such as sending information that can be displayed on a graphical user interface operable on the mobile device. The user may respond through tactile manipulation of the mobile device. In one embodiment, the directory identification module 106 can then place a phone call from the mobile communication device to the telephone number that is selected by the speech attendant module.

In one embodiment, the directory identification module 106 can include information about the caller and selected calling conditions that can substantially reduce the amount of filtering that is performed at the speech attendant module 112. A typical speech attendant module can include a variety of different filters. For example, filters can be used to determine whether the call is made from a wired line or a wireless line to account for additional background noise that may be present in a wireless call. Another filter can be used to send the call to a speech recognition model that is selected based on the gender of the caller to account for the voice pitch of the caller. Another filter may be used to select a speech recognition model based on the caller's spoken language or dialect.

To increase the accuracy of speech recognition performed at the speech attendant module 112, the directory identification module 106 can include selected information about the mobile communication device and the user, such as device type (i.e. mobile phone), gender, spoken language, dialect, and so forth. Alternatively, this information can be initially detected by filters at the speech attendant module and associated with the mobile communication device. In future calls, the previously determined filtering information can be applied to decrease the response time of the speech attendant module.

In another embodiment, a connection module 118 can be in communication with the telephony server 122 and the speech attendant module 112. The connection module can be used to make a first telephone call from the telephony server to the mobile communication device 104 and a second telephone call from the telephony server to the telephone number identified by the speech attendant module as being associated with the audio token 105. The two telephone calls can then be connected by the telephony server, as previously discussed.

It may be preferable for the connection module 118 to place the first telephone call to the telephone number associated with the audio token 105. The connection module can be configured to determine whether the line is busy. If so, an automated agent 124 operating on, or in communication with, the telephony server 122 can be employed to communicate with the user's mobile communication device 104 via a data channel and provide options, such as offering a call back when the line is no longer busy. At that time, the telephony server 122 can place a phone call to the telephone number associated with the audio token and the mobile communication device and then connect the two phone calls to allow the user to communicate with the desired party using the mobile communication device.

In another embodiment, the speech attendant module 112 can be configured to receive the audio token 105 from the mobile communication device 104 and determine the telephone number associated with the audio token. That telephone number can then be communicated back to the directory identification module 106 operating on the mobile communication device 104. The telephone number may be communicated using a data channel. Alternatively, the telephone number can be communicated from the speech attendant module 112 to the directory identification module 106 via a control channel used by the mobile communication device. For instance, the control channel used to communicate via the Short Message Service (SMS) can be used to send the telephone number to the mobile communication device. Using the control channel can eliminate data costs. Once the telephone number associated with the speech token has been received at the mobile communication device 104 then the directory identification module 106 can be configured to place an outgoing telephone call to the telephone number and connect the user to a desired contact in the telephone database 120.

In one example embodiment, a user may be driving to work and decide to place a call to a coworker, Mark Smith in accounting. The user doesn't frequently call Mark, whose telephone number is not included in the user's mobile communication device. The user can activate the hands free dialing feature on her mobile communication device and speak an audio token 105 used to activate the directory identification module 106. For instance, the user may say "call work number". Speaking this audio token may automatically activate the directory identification module. The directory identification module can include an automated agent that audibly requests an audio token from the user. The audio token will typically be a person's name, such as Mark Smith in this example. However, the audio token may be for something other than a name. For instance, the audio token may be a department, such as "accounting" or "legal", a location such as "Sunrise Conference Room" or "copy room 3, or another descriptive term used to characterize a specific telephone number.

Upon receiving the query, the user can speak the audio token "Mark Smith". In one embodiment, the directory identification module can digitally record the audio token "Mark Smith". The audio token 105 may be recorded in an uncompressed format, such as a wave format (.wav) and transmitted over a data channel to the speech attendant module 112. Alternatively, the audio token may be compressed using a lossless compression technique. Common lossless compression algorithms include the Free Lossless Audio Codec (FLAC), WavPack, an open source lossless audio compression format, and Apple Lossless Audio Codec (ALAC). Any type of lossless codec may be used that enables the original audio token to be uncompressed at the speech attendant module 112 in a substantially unchanged format from the original audio token. The use of a lossless compression technique can be advantageous, as it can substantially increase the accuracy of the speech recognition performed at the speech attendant module 112 relative to lossy compression techniques.

However, a lossy compression technique such as the popular Motion Picture Expert's Group MPEG-2 Audio Layer III (MP3) or the Advanced Audio Coding (AAC) lossy compression algorithms can be used to substantially decrease a size of the audio token 105 to reduce the amount of data needed. The speech recognition program used at the speech attendant module 112 can be designed to compensate for changes that may occur in the audio token 105 that are caused by the lossy compression.

In one embodiment, the digital audio recording of the audio token 105 can be transmitted over the data channel to the speech attendant module 112. Alternatively, a portion of the speech recognition algorithm can be performed at the mobile communication device and another portion of the speech recognition algorithm can be performed at the server. For instance, a speech recognition program can use statistical analysis using algorithms such as a Hidden Markov Model to convert the audio token to a numeric value or series of numeric values. In some aspects of the invention such numeric values can be alphanumeric values or other types of data values. The term "numeric values" is inclusive of any binary, decimal, hexadecimal, or other type of data that can represent the audio token. The numeric values can then be transmitted to the speech attendant module 112 for comparison with numeric values used to represent each name (or other nomenclature) associated with each telephone number in the telephone database 120. If the numeric values are substantially similar, the speech attendant module 112 can determine that a match exists and provide the associated telephone number.

The directory identification module 106 operating on the mobile communication device 104 can include a codec that is used by the speech attendant module 112 to assign a numeric value to an audio token 105. The directory identification module can use the codec to convert the audio token to a numeric value. This numeric value can then be transmitted to the speech attendant module 112 using the mobile communication device 104. The numeric value may be transmitted using a data channel or a control channel used by the mobile communication device.

The speech attendant module 112 can then be used to efficiently compare the numeric value received from the directory identification module 106 to determine which name in the telephone database 120 most closely matches to the numeric value. By performing a portion of the speech recognition at the directory identification module 106 it can significantly reduce the amount of data communicated between the mobile communication device 104 and the speech attendant module 112. This, in turn, can significantly reduce the delay in using the speech attendant module 112.

Returning to the example, once the user has spoken the audio token 105 and it has been recorded in a digital format, the directory identification module 106 can interface with the mobile communication device 104 to transmit the recorded audio token (or a numeric value representing the audio token) to the speech attendant module 112. The speech attendant module may operate on the server 116. The speech attendant module can determine a telephone number in the telephone database 120 that most likely matches the audio token or the numeric value. A probability may be assigned by the speech attendant module to the determination. If the probability is less than a predetermined number then the speech attendant module can connect to the mobile communication device through the telephony server 122 and use an automated agent 124 to provide a range of people that may match the audio token, as previously discussed. If the probability is greater than the predetermined number then the speech attendant module can be configured to communicate the telephone number back to the directory identification module, as previously discussed. In this example, the directory identification module can interface with the mobile communication device to connect a phone call to the telephone number provided by the speech attendant module, thereby enabling the user to communicate with Mark Smith. The use of the speech attendant module 112 operating on the server 116 can be configured to function with only a short delay of a few seconds or less.

The mobile speech attendant system 100 enables a user to employ hands free speech recognition to access much larger telephone directories than is typically possible on a mobile communication device 104. The speech attendant module can provide a more accurate service that can take into account background noise, accents, dialects, and other anomalies and provide a result with greater precision than a typical mobile communication device can offer. In addition, the mobile speech attendant system enables a user to benefit from the safety advantages of using hands free dialing when performing other actions such as walking or driving. This can be especially beneficial to companies and corporations that allow employees to drive company owned vehicles. The use of the hands free dialing to call anyone listed in the company phone directory while performing other actions can significantly reduce the liability of the company.

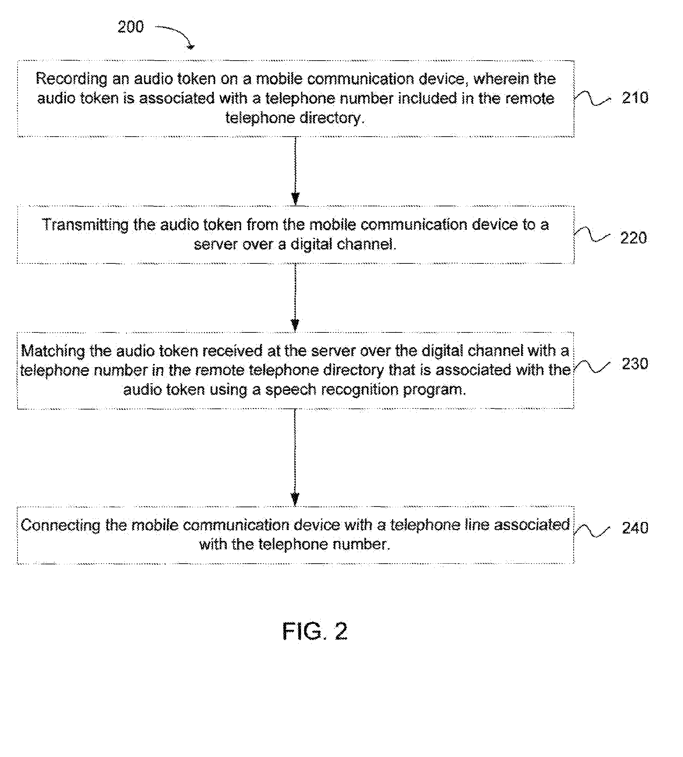

In another embodiment, a method 200 for connecting to a telephone extension listed in a remote telephone directory is disclosed, as depicted in the flow chart of Figure 2. The method comprises the operation of recording 210 an audio token on a mobile communication device. The audio token is associated with a telephone number included in the remote telephone directory. A further operation involves transmitting 220 the audio token from the mobile communication device to a server over a digital channel. The digital channel can be a data channel or a control channel used by the mobile communication device. The audio token is matched 230 with a telephone number in the remote telephone directory that is associated with the audio token using a speech recognition program that is in communication with the server. The mobile communication device is then connected 240 with a telephone line associated with the telephone number.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

It should be understood that many of the functional units described in this specification have been labeled as modules, in order to more particularly emphasize their implementation independence. For example, a module may be implemented as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices or the like.

Modules may also be implemented in software for execution by various types of processors. An identified module of executable code may, for instance, comprise one or more physical or logical blocks of computer instructions, which may, for instance, be organized as an object, procedure, or function. Nevertheless, the executables of an identified module need not be physically located together, but may comprise disparate instructions stored in different locations which, when joined logically together, comprise the module and achieve the stated purpose for the module.

Indeed, a module of executable code may be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different storage devices, and may exist, at least partially, merely as electronic signals on a system or network. The modules may be passive or active, including agents operable to perform desired functions.

Various techniques, or certain aspects or portions thereof, may take the form of program code (i.e., instructions) embodied in tangible media, such as floppy diskettes, CD-ROMs, hard drives, or any other machine-readable storage medium wherein, when the program code is loaded into and executed by a machine, such as a computer, the machine becomes an apparatus for practicing the various techniques. In the case of program code execution on programmable computers, the computing device may include a processor, a storage medium readable by the processor (including volatile and non-volatile memory and/or storage elements), at least one input device, and at least one output device. One or more programs that may implement or utilize the various techniques described herein may use an application programming interface (API), reusable controls, and the like. Such programs may be implemented in a high level procedural or object oriented programming language to communicate with a computer system. However, the program(s) may be implemented in assembly or machine language, if desired. In any case, the language may be a compiled or interpreted language, and combined with hardware implementations.

Reference throughout this specification to "one embodiment" or "an embodiment" means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment and on the contrary the features there discussed are meant to be disclosed in combination with all other embodiments.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as defacto equivalents of one another, but are to be considered as separate and autonomous representations of the present invention.

Furthermore, the described features, structures, or characteristics may be combined in any suitable manner in one or more embodiments. In the following description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

## Claims

1. A method for connecting to a telephone extension listed in a remote telephone directory, comprising:
recording an audio token on a mobile communication device, wherein the audio token is associated with a telephone number included in the remote telephone directory;
transmitting the audio token or a representation of the audio channel from the mobile communication device to a server over a digital channel;
matching the audio token received at the server over the digital channel with a telephone number in the remote telephone directory that is associated with the audio token using a speech recognition program; and
connecting the mobile communication device with a telephone line associated with the telephone number.

2. The method of claim 1, wherein connecting the mobile communication device further comprises:
calling the mobile communication device and the telephone number using a telephony server; and
connecting the call to the mobile communication device and the call to the telephone number as an incoming call to the mobile communication device using the telephony server.

3. The method of claim 1 or claim 2, wherein recording the audio token further comprises recording at least one of a name of a person included in the remote telephone directory and a descriptive term associated with a telephone number in the remote telephone directory.

4. The method of any preceding claim, wherein recording the audio token further comprises performing speech recognition on the audio token at the mobile communication device and sending a numeric value associated with the audio token to the server to allow the server to use the speech recognition program to select the telephone number from the telephone database that is associated with the audio token using the numeric value, and optionally further comprising sending the numeric value from the mobile communication device to the server over one of a control channel used by the mobile communication device and a data channel.

5. The method of any preceding claim, wherein recording an audio token further comprises:
speaking a predetermined term to the mobile communication device;
associating the predetermined term with a selected telephone number on the mobile computing device;
intercepting a phone call attempt to the selected telephone number; and requesting the audio token associated with the telephone number included in the remote telephone directory to be spoken to obtain the recording.

6. The method of any preceding claim, further comprising connecting an automated agent to communicate to a user of the mobile communication device when more than one telephone number in the remote telephone directory is associated with the audio token.

7. The method of any preceding claim, further comprising offering a callback service to the mobile communication device when the telephone line to the telephone number is busy.

8. The method of any preceding claim , wherein matching the audio token further comprises sending the telephone number to the mobile communication device using one of a data channel and a control channel.

9. The method of claim 1, further comprising communicating selected information from the mobile communication device to the server regarding at least one of a type of the mobile communication device and speech information for a user of the mobile communication device to reduce filtering steps in the speech recognition program.

10. A computer program comprising machine readable instructions that when executed by computing apparatus control it to perform the method of any preceding claim.

11. A mobile speech attendant system, comprising:
a directory identification module operable on a mobile communication device that is configured to digitally record an audio token that is associated with a telephone number in a remote telephone directory and communicate the audio token to a server over a digital channel;
a speech attendant module operable on the server that is configured to receive the audio token from the mobile communication device and determine the telephone number associated with the audio token; and
a connection module operable to communicate with a telephony server that is in communication with the speech attendant module and is configured to connect the mobile communication device to a telephone line associated with the telephone number that is associated with the audio token.

12. The system of claim 11, wherein the directory identification module is further configured to perform speech recognition on the audio token at the mobile communication device and transmit a numeric value associated with the audio token to the speech attendant module to allow the speech attendant module to select a telephone number from the telephone database that is associated with the audio token using the numeric value.

13. The system of claim 11 or claim 12, wherein the digital channel is one of a data channel and a control channel used by the mobile communication device.

14. The system of any of claims 11 to 13, wherein the audio token is one of a name of a person in the remote telephone directory and a descriptive term used to characterize a specific telephone number in the remote telephone directory.

15. The system of any of claims 11 to 14, wherein the connection module is further configured to make a telephone call to the mobile communication device and a telephone call to the telephone number and connect the telephone calls to enable the mobile communication device to be connected with the telephone number via an incoming call.
